# EUROPEAN PATENT SPECIFICATION

(11) **EP 0 923 072 B1**
(45) Date of publication and mention of the grant of the patent: **12.06.2002**
(21) Application number: 97203858.2
(22) Date of filing: 09.12.1997
(51) Int. Cl.: G11B 7/24

(54) **Heat mode recording material based on a thin metal layer**
Eine dünne Metallschicht enthaltendes Material für Aufzeichnung nach dem Wärmeverfahren
Matériau d'enregistrement par voie thermique comprenant une couche métallique fine

(43) Date of publication of application: 16.06.1999
(73) Proprietor: AGFA-GEVAERT, 2640 Mortsel (BE)
(72) Inventor: Louwet, Frank c/o Agfa-Gevaert N.V., 2640 Mortsel (BE); De Jaeger, Nico c/o Agfa-Gevaert N.V., 2640 Mortsel (BE); Daems, Eddie c/o Agfa-Gevaert N.V., 2640 Mortsel (BE); Andriessen, Hieronymus c/o Agfa-Gevaert N.V., 2640 Mortsel (BE)

(56) References cited:
- EP-A- 0 225 647
- EP-A- 0 361 704
- EP-A- 0 473 346
- US-A- 4 985 289
- US-A- 5 599 649

## Description

### FIELD OF THE INVENTION

The present invention relates to a heat mode recording material of the DRAW type (Direct Read After Write) based on a coated thin metal layer.

### BACKGROUND OF THE INVENTION

Conventional photographic materials based on silver halide are used for a large variety of applications. As is generally known silver halide materials have the advantage of high potential intrinsic sensitivity and excellent image quality. On the other hand they show the drawback of requiring several wet processing steps employing chemical ingredients which are suspect from an ecological point of view.

In the past several proposals have been made for obtaining an imaging element that can be developed using only dry development steps without the need of processing liquids as it is the case with silver halide photographic materials.

A dry imaging system known since quite a while is 3M's Dry Silver technology. Other types are based on photopolymerisation.

As a further alternative for silver halide chemistry dry imaging elements are known that can be image-wise exposed using an image-wise distribution of heat. When this heat pattern is applied directly by means of a thermal head such elements are called thermographic materials. When the heat pattern is applied by the transformation of intense laser light into heat these elements are called heat mode materials or thermal imaging media.

A particular type of heat mode materials is based on the chemical reduction of organic silver salts. Another category is based on change of adhesion.

In still another particular type of heat mode recording information is recorded by creating differences in reflection and/or in transmission on the recording layer. The recording layer has high optical density and absorbs radiation beams which impinge thereon. The conversion of radiation into heat brings about a local temperature rise, causing a thermal change such as evaporation or ablation to take place in the recording layer. As a result, the irradiated parts of the recording layer are totally or partially removed, and a difference in optical density is formed between the irradiated parts and the unirradiated parts (cf. US Pat. Nos. 4,216,501, 4,233,626, 4,188,214 and 4,291,119 and British Pat. No. 2,026,346)

The recording layer of such heat mode recording materials is usually made of metals, dyes, or polymers. Recording materials like this are described in 'Electron, Ion and Laser Beam Technology", by M. L. Levene et al.; The Proceedings of the Eleventh Symposium (1969); "Electronics" (Mar. 18, 1968), P. 50; "The Bell System Technical Journal", by D. Maydan, Vol. 50 (1971), P. 1761; and "Science", by C. O. Carlson, Vol. 154 (1966), P. 1550.

Recording on such thermal recording materials is usually accomplished by converting the information to be recorded into electrical time series signals and scanning the recording material with a laser beam which is modulated in accordance with the signals. This method is advantageous in that recording images can be obtained on real time (i.e. instantaneously). Recording materials of this type are called "direct read after write" (DRAW) materials. DRAW recording materials can be used as a medium for recording an imagewise modulated laser beam to produce a human readable or machine readable record.

According to EP 0 384 041 a process is provided for the production of a heat mode recording material having DRAW possibilities wherein a web support is provided with a heat mode recording thin metal layer, preferably a bismuth layer, characterized in that in the same vacuum environment a protective organic resin layer in web form is laminated to said supported recording layer by means of an adhesive layer.

A commercially available material manufactured according to the principles of cited EP 0 384 041 is MASTERTOOL MT8, registered trade name, marketed by Agfa-Gevaert N.V.. It is mostly used after recording as master in the manufacturing of microelectronic circuits and printed circuit boards. We refer to the description in Circuit World, Vol. 22, No. 3, April 1996.

In EP 0 687 569 a further alternative to the teachings of EP 0 384 041 is disclosed. In this embodiment, the adhesive layer plus organic resin web is replaced by a single adhesive layer, or by a multiple layer assemblage, applied by lamination in the vacuum chamber, whereby said single adhesive layer or the outermost layer of said assemblage is hardened by heat and/or by ultra-violet radiation or electron beam radiation.

A drawback of the method of preparation of a thin bismuth recording layer by vacuum deposition is the fact that this is a complicated, cumbersome and expensive process.

Therefore, in European patent application appl. No. 9720182 the vacuum deposition is replaced by coating the metal layer from an aqueous medium. According to this disclosure a thin metal layer is formed by the following steps :
(1) preparing an aqueous medium containing ions of a metal,
(2) reducing said metal ions by a reducing agent thus forming metal particles,
(3) coating said aqueous medium containing said metal particles on a transparent support.

In the farmost preferred embodiment of the cited application the metal is bismuth. The laminated protective element disclosed in EP 0 687 569 can simply be replaced by a coated double layer pack, a first soft layer having a good adherance to the metal layer, and a top protective hard layer. Examples of such double layer packs are disclosed in example 4 of the cited application. Such a material design shows however following drawbacks. The metal layer coated from an aqueous medium contains organic substances that are likely to decompose under the influence of high power laser exposure. As a consequence several different gases such as carbon dioxide, carbon monoxide, nitrogen dioxide, and nitrogen monoxide can be formed. When the protective layers are not or badly permeable for these gasses they will accumulate underneath these layers and form bubbles. As a result the protective layers will tend to release easily from the metal layers in the exposed areas where the bubbles are formed. As a drawback interference patterns will often appear in the exposed areas.

The present invention extends the teachings on heat mode materials based on a thin metal recording layer coated from an aqueous medium.

### OBJECTS OF THE INVENTION

It is an object of the present invention to provide a heat mode recording material of the DRAW type, coated from an aqueous medium, having reduced image deterioration upon laser recording.

It is a further object of the present invention to provide a heat mode recording material that shows no interference patterns on laser recording.

### SUMMARY OF THE INVENTION

The objects of the present invention are realized by providing a heat mode recording material comprising :
(1) a transparent support,
(2) a thin metal layer coated from an aqueous solution containing metal particles,
(3) a coated top single layer or double layer assemblage characterized in that said top single layer, or, in case of a double layer assemblage, at least one layer and preferably both contain(s) porous particles having an average size between 0.5 and 20 µm, and a specific pore volume between 0.1 and 5 ml/g.

In one preferred embodiment of the present invention (3) is a single layer that is radiation cured, e.g. by UV, preferably in such a way that a curing gradient is obtained, the harder part being oriented to the surface, the softer part being adjacent to the metal layer.

In another preferred embodiment of the present invention (3) is a double layer pack consisting of a hard polymeric upper layer (3a) having a T_{g} higher than 40 °C, and a soft polymeric under layer (3b) having a T_{g} lower than 25 °C.

In a most preferred embodiment the thin metal layer is a bismuth layer, and the porous particles present in (3) are silica particles.

### DETAILED DESCRIPTION OF THE INVENTION

The different elements constituting the heat mode recording material obtained by the process according to the present invention will now be explained in more detail.

Useful transparent organic resin supports include e.g. cellulose nitrate film, cellulose acetate film, polyvinylacetal film, polystyrene film, polyethylene terephthalate film, polycarbonate film, polyvinylchloride film or poly-Alpha-olefin films such as polyethylene or polypropylene film. The thickness of such organic resin film is preferably comprised between 0.05 and 0.35 mm. In a most preferred embodiment of the present invention the support is a polyethylene terephthalate layer provided with a subbing layer. This subbing layer can be applied before or after stretching of the polyester film support. The polyester film support is preferably biaxially stretched at an elevated temperature of e.g. 70-120°C, reducing its thickness by 1/2 to 1/9 or more and increasing its area 2 to 9 times. The stretching may be accomplished in two stages, transversal and longitudinal in either order or simultaneously. The subbing layer is preferably applied by aqueous coating between the longitudinal and transversal stretch, in a thickness of 0.1 to 5 µm. In case of a bismuth recording layer the subbing layer preferably contains, as described in European Patent Application EP 0 464 906, a homopolymer or copolymer of a monomer comprising covalently bound chlorine. Examples of said homopolymers or copolymers suitable for use in the subbing layer are e.g. polyvinyl chloride, polyvinylidene chloride, a copolymer of vinylidene chloride, an acrylic ester and itaconic acid, a copolymer of vinyl chloride and vinylidene chloride, a copolymer of vinyl chloride and vinyl acetate, a copolymer of butylacrylate, vinyl acetate and vinyl chloride or vinylidene chloride, a copolymer of vinyl chloride, vinylidene chloride and itaconic acid, a copolymer of vinyl chloride, vinyl acetate and vinyl alcohol etc.. Polymers that are water dispersable are preferred since they allow aqueous coating of the subbing layer which is ecologically advantageous. Another preferred subbing layer is coated from an aqueous solution of gelatin, maleic acid and formaldehyde.

The process for preparing the thin metal layer on the transparent support will now be explained on the hand of the preferred embodiment wherein the metal is bismuth.

In a first step (1) an aqueous solution of bismuth ions is prepared. As most suitable bismuth salt bismuth nitrate is chosen. Almost all bismuth salts are poorly soluble in water. In order to maintain a sufficient amount of bismuth ions in solution, it is necessary to add a complexing agent. A preferred complexant is simply the well-known ethylenediaminetetraacetic acid (EDTA) or a homologous compound or a salt thereof. Another preferred one is citrate, e.g. triammonium citrate. Other suitable complexants include diethylenetriamine-pentaacetic acid (DTPA), trans-1,2-diaminocyclohexane-N,N,N',N'-tetraacetic acid (CDTA), ethyleneglycol-0,0'-bis(2-aminoethyl)-N,N,N',N'-tetraacetic acid (EGTA), N-(2-hydroxyethyl)ethylenediamine-N,N,N'-triacetic acid (HEDTA), etc.. In order to keep the metal bismuth that will be formed by reduction in the next step in dispersion a protective colloid binder is preferably added to the aqueous medium. A particularly preferred protective colloid binder is carboxymethylcellulose (CMC), preferably of the high viscosity type. Other possible binders include gelatin, arabic gum, poly(acrylic acid), cellulose derivatives and other polysaccharides. The solution can further contain a so-called dispersing aid (also called co-dispersing agent). Suitable dispersing aids in the case of bismuth are pyrophosphates, more particularly a hexametaphosphate such as sodium hexametaphosphate. Probably, the hexametaphosphate adsorbs to the surface of the bismuth particles so that they become negatively charged. By electrostatic repulsion they are kept in dispersion.

In a following step (2) the bismuth ions in the solution are reduced to metal bismuth particles by means of the addition of a reducing agent. The metal particles are kept in dispersion by the presence of the binder and dispersing aid as described above. A preferred reducing agent is sodium hydrosulphite. Another suitable reducing agent is KBH₄. Others include glucose, formaldehyde, tin(II)chloride. The reducing agent can be added to the original bismuth salt solution as a solid powder. On the other hand the reducing agent can be dissolved separately and added to the bismuth salt solution according to a single jet or a double jet procedure. When the reduction is substantially completed the aqeous medium can directly be coated according to step (3), but more preferably the superfluous salts are first removed from the aqueous medium in a step 2bis, by well-known methods such as ultracentrifugation followed by redispersing, flocculation and washing followed by redispersing, or ultrafiltration. In the case of ultracentrifugation, and using CMC as binder a bismuth-CMC deposit is separated. The ultracentrifugation step may be repeated after washing with fresh water. The final deposit is redispersed in an aqueous medium, preferably containing the same or different binder and/or dispersion aid as the original solution. In the case of a bismuth-CMC deposit the redispersing aqueous medium preferably contains the same dispersing aid as the original solution, e.g. sodium hexametaphosphate. In the final aqueous medium preferable an antioxidant, added at any stage of the preparation, such as ascorbic acid or a derivative thereof is present in order to avoid oxidation to bismuth oxide which would lead to an unacceptable density loss during drying after coating or during conservation of the unprotected bismuth layer. Finally, after the addition of one or more coating agents the obtained aqueous medium is coated on the transparent substrate by means of a conventional coating technique.

The particle size of the reduced metalic bismuth is preferably comprised between 5 and 300 nm, most preferably 10 and 200 nm. The thickness of this Bi layer is preferably comprised between 0.1 and 1.5 µm. When this thickness is too low the recorded images do not have sufficient density. When on the other hand the thickness is too high the sensitivity tends to decrease and the minimal density, i.e. the density after laser recording on the exposed areas tends to be higher.

The formation of the thin metal recording layer has been described on the hand of the preferred embodiment wherein the metal is bismuth. However, the scope of the present invention is not limited to bismuth, but extends to other metals that can form thin metal recording layers by a similar procedure. Possible other metals for the recording layer in this invention include Mg, Mn, Cu, Ag, Au, Zn, Cd, Al, Ga, In, Ge, Sn, As, Sb, Se, Te, Sr, Cu, La, Pb, Nd, Ba, Be, Ca, and Ce. These metals can be used alone or as a mixture or alloy of at least two metals thereof.

It will be readily understood that for each particular metal the choice of the metal ions, the complexant if any, the binder and dispersing aid, the reducing agent, etc., must be optimized and that the preferred embodiments will in most cases deviate from the preferred embodiments wherein the metal is bismuth.

In a first embodiment of the present invention the protective top layer (3) is a single layer that is radiation cured, preferably by UV.

UV-curable coated layers can broadly be classified into two categories : free radical polymerisable, and cationic polymerisable.

In the first type of composition a photoinitiator is present which generates a free radical upon UV exposure. In such a composition the reactive (pre)polymer or oligomer is a compound containing one or more ethylenically unsaturated groups.

Examples of suitable prepolymers for use in a radiation-curable composition for the formation of layer (3) are the following : unsaturated polyesters, e.g. polyester acrylates; urethane modified unsaturated polyesters, e.g. urethane-polyester acrylates. Liquid polyesters having an acrylic group as a terminal group, e.g. saturated copolyesters which have been provided with acryltype end groups are described in published EP-A 0 207 257 and Radiat. Phys. Chem., Vol. 33, No. 5, 443-450 (1989).

Copolyesters substantially free from low molecular weight, unsaturated monomers and other volatile substances are of very low toxicity (ref. the periodical Adhäsion 1990 Heft 12, page 12). The preparation of a large variety of radiation-curable acrylic polyesters is given in German Offenlegungsschrift No. 2838691. Mixtures of two or more of said prepolymers may be used.

Further prepolymers suited for use in radiation (UV or EB) curable compositions are selected from the group consisting of unsaturated urethane(meth)acrylates, epoxy (meth)acrylates, polyether(meth)acrylates and polyester(meth)acrylates as described e.g. in "Chemistry & Technology of UV and EB formulation for coatings, inks and paints" Vol.2 : Prepolymers and Reactive diluents for UV and EB curable formulations." Ed. P.K.T. OLDRING - SITA Technology - London (1991).

A survey of UV-curable coating compositions is given e.g. in the periodical "Coating" 9/88, p. 348-353.

Other usable prepolymers also called oligomers belong to the class of aliphatic and aromatic polyester-urethane acrylates. The structure of polyester-urethane acrylates is given in the booklet "Radiation Cured Coatings" by John R. Constanza, A.P. Silveri and Joseph A. Vona, published by Federation of Societies for Coatings Technology, 1315 Walnut St. Philadelphia, PA 19107 USA (June 1986) p. 9.

In case of use of addition polymerizable monomers these may be monofunctional or plurifunctional by which is meant that they may contain one or more olefinically unsaturated groups. Examples of monofunctional addition polymerizable liquid monomers that may serve as solvent for the above defined polymers (i) and (ii) are the following : methyl (metha)acrylate, ethyl acrylate, butyl acrylate, 2-ethylhexyl methacrylate, 2-hydroxyethyl acrylate, 2-hydroxyethyl methacrylate, glycidyl methacrylate, n-hexyl acrylate, lauryl acrylate, and tetrahydrofurfuryl methacrylate.

Examples of suitable difunctional monomers are : 1,6-hexanediol diacrylate, 1,6-hexanediol dimethacrylate, neopentylglycol diacrylate, 1,4-butanediol diacrylate, ethyleneglycol diacrylate, polyethyleneglycol diacrylate, pentaerythritol diacrylate, divinylbenzene.

Examples of suitable tri- or more functional monomers are : trimethylolpropane triacrylate, trimethylolpropane trimethacrylate, pentaerythritol triacrylate, dipentaerythritol hexaacrylate, an acrylate of ethylenediamine, aliphatic and aromatic urethane acrylates and the monomers according to general formula (I) described in non-published European patent application No. 91200468.6 filed March 5, 1991, wherein reference is made for the preparation of said monomers to published German patent applications Nos. 3,522,005, 3,703,080, 3,643,216, 3,703,130, 3,703,080, 3,917,320 and 3,743,728.

In a preferred embodiment of the present invention the UV-curable substance is a multifunctional acrylate monomer, most preferably an epoxy-acrylate monomer.

Photoinitiators suitable for use in photo-radical production belong to the class of organic carbonyl compounds, for example, benzoin ether series compounds such as benzoin isopropyl, isobutylether; benzil ketal series compounds; ketoxime esters; benzophenone series compounds such as benzophenone, o-benzoylmethylbenzoate; acetophenone series compounds such as acetophenone, trichloroacetophenone, 1,1-dichloroacetophenone, 2,2-diethoxyacetophenone, 2,2-dimethoxy-2-phenylacetophenone; thioxanthone series compounds such as 2-chlorothioxanthone, 2-ethylthioxanthone; and compounds such as 2-hydroxy-2-methylpropiophenone, 2-hydroxy-4'-isopropyl-2-methylpropiophenone, 1-hydroxycyclohexylphenylketone; etc.

In the cationically polymerisable type of UV curable coatings the photoinitiator generates a proton or cation on exposure. In a typical embodiment this cation causes cycloaliphatic epoxide molecules to crosslink quickly with each other, with hydroxyl compounds, and/or with vinyl ether compounds. Cationically cured UV systems are usually formulated with members of these classes of compounds.

As an alternative for UV curing electron beam curing can be used. Due to the high energy of the electrons the presence of a photoinitiator is unnecessary.

In the described first embodiment of the present invention the power distance towards the layer (3) and the exposure time of the UV exposure are preferably optimized in such a way that a vertical hardening gradient is obtained, the harder part being located at the surface of layer (3) and the softer part being adjacent to the thin metal layer. The interior part of the layer, thanks to its relative softness and elasticity will promote the formation of relative large bismuth spheres in the exposed parts having a diameter of 1 to 1.5 µm. It will be readily understood that such relatively large microspheres, corresponding to a relatively small specific surface, will be favourable for obtaining a low Dmin. The hard exterior part of the hardening gradient situated on top of the layer assures good physical protection.

In a second preferred embodiment of the present invention (3) is a double layer assemblage consisting of a hard polymeric upper layer (3a) having a T_{g} higher than 40 °C, and a soft polymeric under layer (3b) having a T_{g} lower than 25 °C. By such a layer arrangement the same favourable physical conditions are obtained as in the embodiment with a single layer showing a curing gradient : a soft medium touches the bismuth layer allowing for the formation of the desired type of bismuth spheres, while the hard surface assures good physical protection.

Polymers having a glass transition temperature (Tg) below 25 °C are known to those skilled in the art and some of them are described in Journal of Chemical Education, Vol. 61, Number 8, August 1984, p. 668 in the article "An Overview of the Glass Transition Temperature of Synthetic Polymers". Examples of such polymers are selected from the group consisting of a polyolefin, e.g. polyethylene or poly(1-butene), an ethylene-vinylacetate copolymer, an ethylene-acrylic acid(ester) copolymer, a styrenebutadiene copolymer, a polyamide or polyester having aliphatic carbon chains, e.g. poly(ethylene adipate).

In a preferred embodiment the polymeric soft layer (3b) comprises a polymer chosen from a polyacrylate, a copolymer of an acrylate, poly(vinyl acetate) and a copolymer of vinyl acetate.

In a preferred embodiment the polymer constituting the main ingredient of the hard top polymeric layer (3a) is chosen from polyvinylpyrrolidone, polyethylene (e.g. Poly-EM-40, Cosden Petrol Co.), copoly(ethylacrylate-methacrylic acid), polyvinylalcohol, hardened polyvinylalcohol, gelatin, hardened gelatin, self-crosslinking acrylic/polyurethane hybrid dispersions (cf. the UCECOATES DW 5000 series, available from UCB) These polymers are coated from aqueous solutions or dispersions.

Other suitable hard polymeric binders for the top layer include polymethylmethacrylate, nitrocellulose and polyvinylbutyral which are coated from an organic solvent.

The gist of the present invention is the presence in layer (3) or in at least one of layers (3a) and (3b), preferably in both, of porous particles having an average particle size between 0.5 and 20 µm, and a specific pore volume between 0.1 and 5 ml/g. In a most preferred embodiment the average particle size is comprised between 3 and 7 µm, and the specific pore volume is comprised between 1.0 and 4.0 ml/g.

The most porous particles are the most effective. It is believed that the porous particles serve as a kind of chimney or buffer reservoir for the removal of gasses formed due to thermal decomposition of organic substances in the metaI layer during the intense laser exposure.

Preferred crystalline porous particles are silica particles. Prefered types of silica particles are SYLOID 161 and 244 manufactured by GRACE Co., and GASIL and CROSFIELD HP200 type from Crosfield Chemie BV.

Another preferred type of porous particle is TOSPEARL 103 (Toshiba Silicone Co.) which is a crosslinked silicon bead.

For the formation of a heat mode image using the material of the present invention any laser can be used which provides enough energy needed for the production of sufficient heat for this particular process of image formation. In a preferred embodiment a powerful infra-red laser is used, most preferably a Nd-YLF laser or diode laser.

The present invention will now be illustrated by the following examples without however being limited thereto.

### EXAMPLES

### Example 1

This example illustrates the embodiment wherein (3) is a double layer pack consisting of a soft and a hard polymeric layer.

### Preparation of the coated bismuth dispersion

The following solutions were prepared:

| Solution 1 | |
|---|---|
| Water | 564 ml |
| HNO₃ (concentrated) | 83 ml |
| Bi(NO₃)₃.5H₂O | 329 g |
| Triammonium citrate (50% in water) | 1127 ml |
| NH₃ (26% in water) (pH = 12) | 305 ml |

| Solution 2 | |
|---|---|
| Na₂S₂O₄ (16.7 % in water) | 1238 ml |

| Solution 3 | |
|---|---|
| Water | 650 ml |
| Triammonium citrate (50% in water) | 400 ml |
| Carboxymethylcellulose (3% in water) | 104 ml |
| Na₆O₁₈P₆ (2% in water/ethanol; 85/15) | 136 ml |

To solution 3, held at 40°C and stirred at 450 rpm, solution 1 at a flow rate of 200 ml/min was added simultaneously with solution 2 at 112.5 ml /min. After the reduction, the bismuth dispersion was ultrafiltrated through a Fresenius F60 cartridge and diafiltrated with a 0.2% solution of sodium hexametaphosphate in water/ethanol (98.5/1.5).

The dispersion was stirred and 4 g of ascorbic acid, 10 ml of a 12.5% solution of Saponine Quillaya (Schmittmann) in water/ethanol (80/20) were added.

Subsequently this dispersion was coated on a substrated PET foil so that a density of 3.5 (Macbeth optical densitometer) was obtained.

### Preparation of the coated samples

On the bismuth layer, two protective layers were coated: a layer with a low T_{g} (3b), in order to allow the desired bismuth beads to be formed upon laser radiation, and a top layer with a high T_{g} (3a), in order to give the material sufficient physical protection.

The first protective layer (3b) was the commercially available filmforming latex Neocryl BT9 (from Zenica Resins - Waalwijk, The Netherlands) having a T_{g} of 1 °C, and the toplayer (3a) was copoly(ethylacrylate-metacrylic acid) (20/80). The thickness of each protective layer was 3 µm.

Several commercially available silica particles were added to the layers. Specifications of these particles are given in the following table :

| type | size | pore volume | manufacturer |
|---|---|---|---|
| SYLOID 161 | 4 µm | 1.2 ml/g | Grace |
| SYLOID 244 | 2 µm | 1.6 ml/g | Grace |
| GASIL 937 | 6.5 µm | 1.2 ml/g | Crosfield Chemie BV |
| CROSFIELD HP200 | 6 µm | 1.8 ml/g | Crosfield Chemie BV |

In each experiment, the total amount of silica particles was 0.3 g/m². The resulting materials were exposed by a NdYLF laser emitting at 1064 nm. The image plane power was set at 350 mW. A spot size of 16 µm was used together with a pitch of 8 µm at a scan speed of 4.4 m/s. The results are shown in the following table.

| Sample | Silica particles | Silica in layer | Dₘᵢₙ | Adhesion after exposure^{(*)} | Bubble formation |
|---|---|---|---|---|---|
| A (ref) | - | - | 0.62 | bad | many |
| B (inv) | Syloid 161 | 3b | 0.55 | medium | some |
| C (") | Syloid 244 | 3b | 0.56 | medium | some |
| D (") | Gasil 937 | 3b | 0.60 | medium | some |
| E (") | Crosfield HP200 | 3b | 0.55 | medium | some |
| F (") | Syloid 161 | 3a | 0.61 | medium | some |
| G (") | Syloid 244 | 3a | 0.62 | medium | some |
| H (") | Gasil 937 | 3a | 0.61 | medium | some |
| I (") | Crosfield HP200 | 3a | 0.62 | medium | some |
| J (") | Syloid 161 | 3a & b | 0.60 | good | none |
| K (") | Syloid 244 | 3a & b | 0.56 | good | none |
| L (") | Gasil 937 | 3a & b | 0.56 | good | none |
| M (") | Crosfield HP200 | 3a & b | 0.59 | good | none |

| | | | | | |
|---|---|---|---|---|---|
| ^{(*)} This test was carried out with a TT4122 TESA Tape. | | | | | |

The table shows that the silica particles are effective in improving the adhesion of the protective polymeric layers to the bismuth layer and in reducing the formation of gas bubbles. The table further shows that the particles are most effective when they are present in both layers (3a) and (3b).

### Example 2

This example illustrates the embodiment wherein (3) is a single layer that is cured by radiation.

### Preparation of the coated bismuth dispersion

See example 1

### Preparation of the coated samples

Onto the bismuth layer a protective layer of a UV-curable cationic system based on cycloaliphatic epoxides was coated. The compositions of these coatings were as follows :

| Composition | Examples No. | | | |
|---|---|---|---|---|
| | 2.1 | 2.2 | com. 1 | com. 2 |
| CYRACURE cycloaliph. epoxide UVR-6110 available from Union Carbide | 67.1 g | 67.1 g | 67.1 g | 67.1 g |
| cellulose-acetate-butyrate | 5.4 g | 5.4 g | 5.4 g | 5.4 g |
| CYRACURE Photoinitiator UVI-6990 (arylsulphonium salt) available from Union Carbide | 2.5 g | 2.5 g | 2.5 g | 2.5 g |
| TONE polyol 0305 (trifunctional flexi bilizer) from Union Carbide | 20 g | 20 g | 20 g | 20 g |
| EFKA 35 (surfactant) available from EFKA Chemical | 1 g | 1 g | 1 g | 1 g |
| EUROPOX RVH 1,6-hexanediol glycidylether | 4 g | 4 g | 4 g | 4 g |
| methylethylketone | 97 g | 97 g | 97 g | 97 g |
| TOSPEARL 145 (pore vol. 0.58 ml/g size - 4.5 µm) from Toshiba Silicone Co. | 3 g | 6 g | - | - |
| Total coating thickness | 20 µm | 20 µm | 20 µm | 20 µm |
| Total dry thickness | 10 µm | 10 µm | 10 µm | 10 µm |

The coated layer was cured under a UV-unit at a power of 40 W/cm² and at a speed of 3 m/min in a TECHNIGRAPH UV-28/1 Light System type. In examples 2.1 and 2.2 the total amount of TOSPEARL was 0.3 g/m².

The resulting materials were exposed by means of a NdYLF laser emitting at 1064 nm. The image plane power was set at 350 mW. A spot size of 16 µm was used with a pitch of 8 µm at a scan speed of 4.4 m/s. The results are shown in the following table.

| Sample | TOSPEARL | Dmin | adhesion after exp.(*) | bubble formation |
|---|---|---|---|---|
| ex. 2.1 | yes | 0.38 | well | some |
| ex. 2.2 | yes | 0.36 | well | none |
| comp. 1 | no | 0.41 | good | many |
| comp. 2 | no | 0.40 | good | many |

| | | | | |
|---|---|---|---|---|
| (*) : this test was carried out with a TESA 4122 tape. | | | | |

The table above shows that crosslinked silicone beads are effective in reducing the formation of gas bubbles.

## Claims

1. Heat mode recording material comprising, in order :
(1) a transparent support optionally subbed,
(2) a thin metal layer coated from an aqueous solution containing metal particles,
(3) a coated top single layer or double layer assemblage **characterized in that** said top single layer, or at least one layer of said double layer assemblage contains porous particles having an average size between 0.5 and 20 µm, and a specific pore volume between 0.1 and 5 ml/g.

2. Heat mode recording material according to claim 1 wherein (3) is a single layer that is cured by radiation.

3. Heat mode recording material according to claim 2 wherein said cured layer (3) shows a vertical curing gradient, the harder part being located at the surface of said layer (3), and the softer part being adjacent to the thin metal layer (2).

4. Heat mode recording material according to claim 2 or 3 wherein said radiation is ultra-violet radiation.

5. Heat mode recording material according to claim 1 wherein (3) is a double layer assemblage wherein the upper layer (3a) is a hard polymeric layer having a glass transition temperature T_{g} higher than 40 °C, and the under layer (3b) is a soft polymeric layer having a glass transition temperature T_{g} lower than 25 °C.

6. Heat mode recording material according to claim 5 wherein said hard upper layer (3a) comprises a polymer chosen from the group consisting of copoly(ethylacrylate-methacrylic acid), polyvinylalcohol, hardened polyvinylalcohol, gelatin, and hardened gelatin.

7. Heat mode recording material according to claim 5 wherein said soft under layer (3b) comprises a polymer chosen from the group consisting of a polyacrylate, a copolymer of an acrylate, poly(vinyl acetate), and a copolymer of vinyl acetate.

8. Heat mode recording material according to any of claims 5 to 7 wherein said crystalline porous particles are present both in layers (3a) and (3b).

9. Heat mode recording material according to any of claims 1 to 8 wherein said porous particles are silica particles.

10. Heat mode recording material according to any of claims 1 to 9 wherein said aqueous solution comprising metal particles is prepared by the following steps :
(a) preparing an aqueous solution containing ions of said metal,
(b) reducing said metal ions by a reducing agent thus forming metal particles.

11. Heat mode recording material according to any of claims 1 to 10 wherein said metal layer is a bismuth layer and said metal particles are bismuth particles.

12. Heat mode recording material according to claim 11 wherein the average particle size of said bismuth particles is comprised between 10 and 200 nm.

13. Method for the formation of a heat mode image comprising exposing information-wise to laser radiation a heat mode recording material as defined in any of the preceding claims.

14. Method according to claim 13 wherein said laser is an infra-red laser.

## Patentansprüche

1. Thermisches Aufzeichnungsmaterial, das der angegebenen Reihe nach folgendes umfasst:
(1) ein transparenter, gegebenenfalls substrierter Träger,
(2) eine dünne Metallschicht, die aus einer wässrigen, Metallteilchen enthaltenden Lösung gegossen ist,
(3) eine vergossene Einzeldeckschicht oder eine Zweischichtanordnung
**dadurch gekennzeichnet, dass** die Einzeldeckschicht, oder zumindest eine Schicht der Zweischichtanordnung, poröse Teilchen mit einer mittleren Größe zwischen 0,5 et 20 µm und einem spezifischen Porenvolumen zwischen 0,1 und 5 ml/g enthält.

2. Thermisches Aufzeichnungsmaterial nach Anspruch 1, **dadurch gekennzeichnet, dass** (3) eine Einzelschicht ist, die durch Strahlung ausgehärtet ist.

3. Thermisches Aufzeichnungsmaterial nach Anspruch 2, **dadurch gekennzeichnet, dass** die ausgehärtete Schicht (3) einen vertikalen Aushärtungsgradienten aufweist, wobei das härtere Teil an der Oberfläche der Schicht (3) liegt und das weichere Teil an die dünne Metallschicht (2) grenzt.

4. Thermisches Aufzeichnungsmaterial nach Anspruch 2 oder 3, **dadurch gekennzeichnet, dass** die Strahlung Ultraviolettstrahlung ist.

5. Thermisches Aufzeichnungsmaterial nach Anspruch 1, **dadurch gekennzeichnet, dass** (3) eine Zweischichtanordnung ist, wobei die obere Schicht (3a) eine harte Polymerschicht mit einem Einfrierpunkt Tg höher als 40°C ist und die untere Schicht (3b) eine weiche Polymerschicht mit einem Einfrierpunkt Tg niedriger als 25°C ist.

6. Thermisches Aufzeichnungsmaterial nach Anspruch 5, **dadurch gekennzeichnet, dass** die harte Oberschicht (3a) ein Polymer aus der Gruppe bestehend aus Poly(ethlylacrylat-co-methacrylsäure), Polyvinylalkohol, gehärtetem Polyvinylalkohol, Gelatine oder gehärteter Gelatine enthält.

7. Thermisches Aufzeichnungsmaterial nach Anspruch 5, **dadurch gekennzeichnet, dass** die weiche Unterschicht (3b) ein Polymer aus der Gruppe bestehend aus einem Polyacrylat, einem Copolymer eines Acrylats, Poly(vinylacetat) und einem Copolymer von Vinylacetat enthält.

8. Thermisches Aufzeichnungsmaterial nach irgendwelchem der Ansprüche 5 bis 7, **dadurch gekennzeichnet, dass** die kristallinen porösen Teilchen sowohl in Schicht (3a) als in Schicht (3b) enthalten sind.

9. Thermisches Aufzeichnungsmaterial nach irgendwelchem der Ansprüche 1 bis 8, **dadurch gekennzeichnet, dass** die porösen Teilchen Silikateilchen sind.

10. Thermisches Aufzeichnungsmaterial nach irgendwelchem der Ansprüche 1 bis 9, **dadurch gekennzeichnet, dass** die wässrige, Metallteilchen enthaltende Lösung durch die folgenden Schritte bereitet wird:
(a) Bereitung einer wässrigen Lösung, die Ionen dieses Metalls enthält,
(b) Reduktion dieser Metallionen mit einem Reduktionsmittel, wodurch Metallteilchen gebildet werden.

11. Thermisches Aufzeichnungsmaterial nach irgendwelchem der Ansprüche 1 bis 10, **dadurch gekennzeichnet, dass** die Metallschicht eine Wismutschicht ist und die Metallteilchen Wismutteilchen sind.

12. Thermisches Aufzeichnungsmaterial nach Anspruch 11, **dadurch gekennzeichnet, dass** die mittlere Teilchengröße dieser Wismutteilchen zwischen 10 und 200 nm liegt.

13. Verfahren zur Herstellung eines thermischen Bildes, das die informationsmäßige Belichtung mit Laserbestrahlung eines thermischen Aufzeichnungsmaterials wie in irgendwelchem der vorstehenden Ansprüche definiert, umfasst.

14. Verfahren nach Anspruch 13, **dadurch gekennzeichnet, dass** dieser Laser ein Infrarotlaser ist.

## Revendications

1. Matériau d'enregistrement thermique comprenant dans l'ordre donné:
(1) un support transparent éventuellement substraté,
(2) une couche métallique mince coulée à partir d'une solution aqueuse contenant des particules métalliques,
(3) une couche superficielle unique coulée ou un paquet de deux couches
**caractérisé en ce que** ladite couche superficielle unique, ou au moins une couche dudit paquet de deux couches contient des particules poreuses possédant des dimensions moyennes entre 0,5 et 20 µm, et un volume poreux spécifique entre 0,1 et 5 ml/g.

2. Matériau d'enregistrement thermique selon la revendication 1, **caractérisé en ce que** (3) est une couche unique cuite par radiation

3. Matériau d'enregistrement thermique selon la revendication 2, **caractérisé en ce que** ladite couche cuite (3) a un gradient de cuisson vertical, avec la partie plus dure étant située à la surface de la couche (3) et la partie plus molle étant adjacente à la couche métallique mince (2).

4. Matériau d'enregistrement thermique selon la revendication 2 ou 3, **caractérisé en ce que** ladite radiation est de la radiation ultraviolette.

5. Matériau d'enregistrement thermique selon la revendication 1, **caractérisé en ce que** (3) est un paquet de deux couches dans lequel la couche de dessus (3a) est une couche polymère dure possédant une température de vitrification Tg supérieure à 40°C et la couche de dessous (3b) est une couche polymère molle possédant une température de vitrification Tg inférieure à 25°C.

6. Matériau d'enregistrement thermique selon la revendication 5, **caractérisé en ce que** ladite couche de dessus dure (3a) comprend un polymère choisi dans le groupe constitué par le poly(acrylate d'éthyle-*co*-acide méthacrylique), l'alcool polyvinylique, l'alcool polyvinylique durci, la gélatine et la gélatine durcie.

7. Matériau d'enregistrement thermique selon la revendication 5, **caractérisé en ce que** ladite couche de dessous (3b) molle comprend un polymère choisi dans le groupe constitué par un polyacrylate, un copolymère d'un acrylate, le poly(acétate de vinyle) et un copolymère d'acétate de vinyle.

8. Matériau d'enregistrement thermique selon l'une quelconque des revendications 5 à 7, **caractérisé en ce que** les particules poreuses cristallines sont présentes à la fois dans la couche (3a) et (3b).

9. Matériau d'enregistrement thermique selon l'une quelconque des revendications 1 à 8, **caractérisé en ce que** lesdites particules poreuses sont des particules de silice.

10. Matériau d'enregistrement thermique selon l'une quelconque des revendications 1 à 9, **caractérisé en ce que** ladite solution aqueuse comprenant des particules métalliques est préparée par les phases consistant à:
(a) préparer une solution aqueuse contenant des ions dudit métal,
(b) réduire les ions dudit métal par un agent réducteur, formant ainsi des particules métalliques.

11. Matériau d'enregistrement thermique selon l'une quelconque des revendications 1 à 10, **caractérisé en ce que** ladite couche métallique est une couche de bismuth et lesdites particules métalliques sont des particules de bismuth.

12. Matériau d'enregistrement thermique selon la revendication 11, **caractérisé en ce que** la grandeur moyenne des particules de bismuth est comprise entre 10 et 200 nm

13. Procédé pour la formation d'une image thermique comprenant l'exposition sous forme d'information à un rayonnement laser d'un matériau d'enregistrement thermique tel que défini dans l'une quelconque des revendications précédentes.

14. Procédé selon la revendication 13, **caractérisé en ce que** ledit laser est un laser infrarouge.
